# EUROPEAN PATENT APPLICATION

(11) **EP 2 575 414 A2**
(43) Date of publication of application: **03.04.2013**
(21) Application number: 12186117.3
(22) Date of filing: 26.09.2012
(51) Int. Cl.: H05B 35/00

(54) **A light detector to control a hybrid lamp**

(30) Priority: 29.09.2011 US 201113248604
(71) Applicant: General Electric Company, Schenectady, NY 12345 (US)
(72) Inventor: Lucz, Peter, 1044 Budapest (HU); Vigh, Peter, 1044 Budapest (HU); Bankuti, Laszlo, 1044 Budapest (HU); Torok, Balazs, 1044 Budapest (HU)
(74) Representative: Picker, Madeline Margaret

(57) **Abstract**

A lamp assembly (100) provides both instant light through use of an incandescent/halogen lamp source (140) and an energy saving type light provided by a compact fluorescent lamp source (112). Both light sources are enclosed within a common envelope or outer bulb (160). The sensor member (170) monitors light output from a central region of the CFL at a region spaced from the first and second ends in order to obtain an accurate representation of full light output from the CFL before shutting off or terminating power to the incandescent lamp source.

## Description

### BACKGROUND OF THE DISCLOSURE

This disclosure is directed to a lamp assembly, such as a lamp assembly that provides energy savings and also provides for instant light.

One proposed solution to reducing the time to full light while still obtaining the benefits of an energy savings lamp is to combine two lamps in one unit. More particularly, a compact fluorescent lamp (CFL) and a conventional incandescent lamp are combined. Although it has been suggested to simultaneously turn on both lamps in order to result in instant light from the incandescent lamp, and then subsequently terminate or switch off the incandescent lamp to obtain the benefits of the energy efficient CFL, these known arrangements do not provide an efficient and effective manner for determining when to shut off the incandescent lamp, i.e., using the compact fluorescent lamp exclusively once the CFL has warmed up.

Before preheating is complete, there is no light emission from the CFL lamp. Once the arc discharge is initiated, the compact fluorescent lamp (CFL) still requires an additional approximately 20 to 120 seconds or more to reach full light output. During this warm-up period, there is a need for light and this is provided by the secondary light source, which in most instances is an incandescent lamp source. Once the CFL has reached full light output, there is no longer any need to operate the secondary lamp source. Therefore, when to switch off the secondary of incandescent lamp source presents a challenge.

In one solution, it has been suggested that a thermally sensitive element be located in the ballast compartment to indicate when the CFL has reached sufficient temperature indicative of sufficient light output after start-up. Unfortunately, this solution does not always provide an accurate assessment of the actual thermal conditions of the discharge vessel. Further, locating a thermally sensitive element in a ballast compartment is potentially impacted by temperature variations caused by different illumination positions of the lamp e.g. vertically upright or inverted.

Likewise, other indirect factors can be inaccurate in defining when the light output of the primary light source (CFL) has stabilized. The time to switch off the secondary or incandescent lamp source can be influenced by a random switching cycle, ambient temperature, etc. As a result, the thermally sensitive element does not provide an accurate representation of the heat conditions nor does the thermally sensor necessarily provide an accurate indicator of when to terminate operation of the secondary, incandescent lamp source.

Still another proposed solution is to apply power to the incandescent lamp for a preselected time period. Again, this solution is not sufficiently accurate since various conditions may suggest a different time period.

Consequently, a need exists for a long-life compact fluorescent lamp that provides energy savings with instant light capabilities, and overcomes the problems noted with regard to turning off the secondary light source once the more efficient, energy savings CFL source has reached full light output.

### SUMMARY OF THE DISCLOSURE

A lamp assembly of the present disclosure provides for instant light, and is also an energy saving lamp that advantageously uses two light sources in a single outer bulb that accurately determines when to shut off the secondary, instant light source.

The light sensor member may be disposed in the envelope at a location for reliably detecting light from a central portion of the discharge lamp.

A lamp assembly according to an embodiment includes a lamp base having a compartment. A fluorescent lamp source and an incandescent lamp source are each mounted to the lamp base. An envelope forms a cavity around at least the fluorescent and incandescent lamp sources. A power control module received in the lamp base compartment is operatively connected to the lamp sources. The light sensor member disposed in the envelope cavity monitors whether to terminate power supply to the incandescent lamp source.

The light sensor may be located between first and second ends of the discharge lamp since the ends of the discharge lamp source will initially illuminate while a central portion of the discharge lamp would be the last to reach full light output.

The light sensor may be located so as not to be impacted by light emitted from the first and second ends of the discharge lamp source.

Further, the light sensor may be located so as not to be impacted by light emitted from the secondary, incandescent lamp source.

A method of assembling a lamp assembly includes providing a lamp base, mounting a primary or fluorescent lamp source to the base, positioning a secondary or an incandescent lamp source adjacent the fluorescent lamp source, enclosing at least the fluorescent lamp source and the incandescent lamp source in a common envelope or bulb, locating a sensor in the bulb to monitor light output, and connecting the fluorescent lamp source and the incandescent lamp source to a power control module for selectively terminating power to the incandescent lamp source in response to a predetermined light output from the fluorescent lamp source.

The method may include locating a light sensor in the bulb at a location spaced from first and second ends of the fluorescent lamp so as to monitor light output from a central region of the fluorescent lamp.

The method may include orienting the light sensor to minimize light received by the light sensor from the incandescent lamp source.

The method may include forming the florescent lamp as a compact fluorescent lamp.

The method may further comprise forming the fluorescent lamp in a spiral configuration.

A primary benefit of embodiments of the present disclosure is the ability to provide instant light in an energy saving lamp assembly.

Another benefit resides in that both light sources are initially energized to provide instant light, then the secondary, incandescent lamp source is shut off once the primary, fluorescent lamp source reaches full light output.

Still another benefit is associated with monitoring a central region of the fluorescent lamp source with a light sensor in order to assure that full light output has been reached before shutting off the secondary lamp source.

Still other benefits and advantages of embodiments of the present disclosure will become apparent upon reading and understanding the following detailed description.

### BRIEF DESCRIPTION OF THE DRAWINGS

Figure 1 is an elevational view of the lamp assembly, with portions of the bulb and fluorescent lamp source in cross-section.
Figure 2 is an enlarged view of the lamp assembly shown in partial cross-section.

### DETAILED DESCRIPTION OF EMBODIMENTS

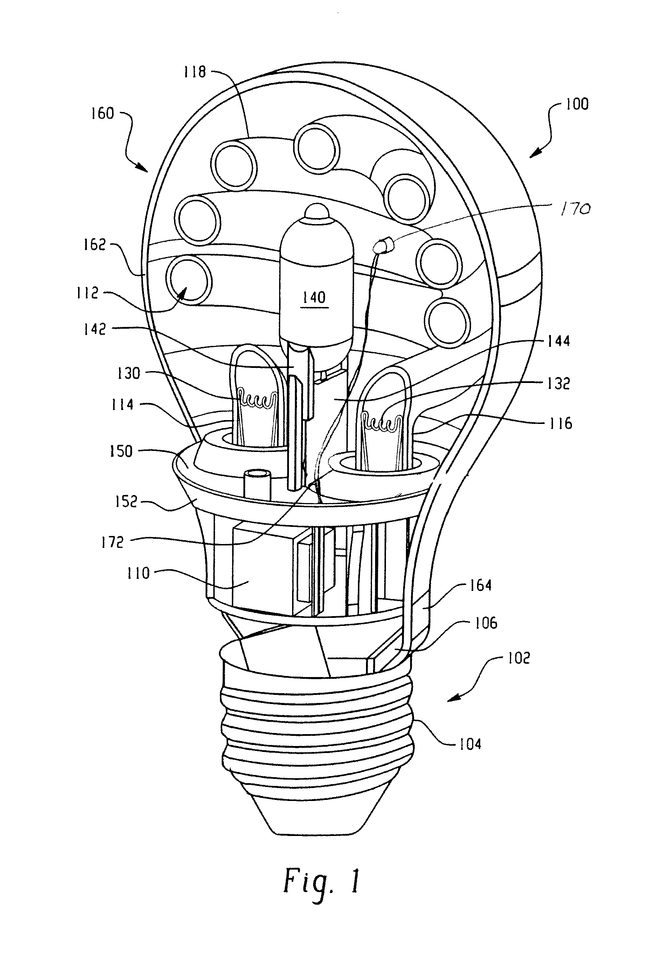

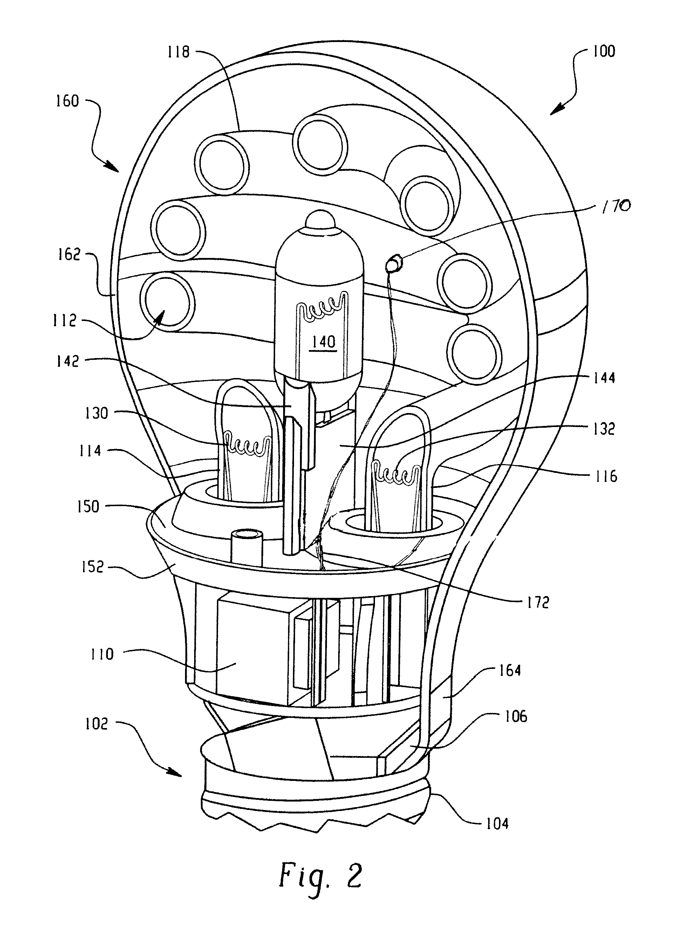

Figures 1 and 2 show a lamp assembly 100, and more particularly a combination of a discharge or a fluorescent lamp source such as compact fluorescent lamp (CFL) assembly (that is generally referred to herein as an energy saving lamp or light source) and a secondary light source such as an incandescent lamp assembly that advantageously provides instant light. A lamp base 102 includes a mechanical and electrical arrangement for receipt in an associated lamp socket (not shown) to mechanically support the lamp assembly 100 and provide power to operate the lamp assembly. More particularly, and without need to be limiting, a conventional Edison-base 102 is shown that includes a conductive, threaded metal shell 104 for threaded receipt in an associated lamp socket, and typically includes an electrical eyelet or second contact (not shown) spaced from the threaded shell 104 by insulating material at the lower end of the lamp assembly. This arrangement provides a two lead arrangement for establishing electrical contact associated with the lamp socket in a manner generally known in the art. Of course, one skilled in the art will appreciate that alternative lamp socket arrangements may be used without departing from the scope and intent of the present disclosure.

At least a portion of the lamp base forms a compartment or inner cavity 106 that receives a power control module 110 such as a ballast mounted on a printed circuit board that allows an AC source to drive the lamp sources or light emitting components of the lamp assembly 100. For example, a ballast is typically enclosed within a portion of compartment 106. Mounted to the lamp base is a first or fluorescent lamp source 112. The illustrated fluorescent lamp source is preferably a compact spiral configuration or double-helix CFL arrangement that includes first and second legs 114, 116 that have lower portions extending in substantially parallel relation to a longitudinal axis of the lamp assembly. The legs are disposed adjacent the power control module or ballast in order to provide ease of connection of the primary, CFL lamp source with the associated electronics. Intermediate the first and second legs 114, 116, a remainder of discharge tube 118 adopts a generally spiral configuration of the compact fluorescent lamp source. A fill gas is sealed within the discharge tube, and electrodes or cathodes 130, 132 are provided in the respective legs 114, 116, and located at opposite ends of an elongated discharge path that extends through the length of the spiral discharge tube. As is known in the art, an arc is initiated between the cathodes and light emitted from the ionized fill is emitted as visible light in a desired color by passing through a phosphor provided on an inner surface of the discharge tube.

A secondary or incandescent lamp source 140, such as an incandescent lamp source having a filament (not shown), is also mounted to the lamp base. In another arrangement, the second lamp source is a tungsten halogen lamp. As illustrated in Figures 1 and 2, the incandescent lamp source may be a single ended light source that is centrally located within a hollow interior region formed within the spiral portion of the CFL. Particularly, base region or leg 142 of the incandescent lamp source 140 is received in a support 144 that extends from a shield or barrier 150 that separates the compartment of the lamp base that houses the power control module from the light emitting portions of the first and second lamp sources 112, 140.

The lamp sources also may be housed or enclosed within a common envelope or outer bulb 160. The bulb 160 is dimensioned to enclose the CFL source 112 and the incandescent lamp source 140 within its hollowed, generally spherical portion 162 and the bulb has a reduced dimension as it proceeds toward sealed engagement with the lamp base along a necked-down region 164. The shield 150 may be located within this transition region between the spherical portion 162 and the necked-down region 164 of the bulb and the shield 150 advantageously protects heat sensitive components of the power control module 110 from the elevated temperatures associated with operation of the first and second lamp sources 112, 140. A perimeter portion 152 of the shield 150 abuts against the inner surface of the bulb 160, while selected openings through the shield permit the electrical connections between the legs of the CFL source 112 and the incandescent lamp source 140 with the power control module.

A sensor member 170 is disposed in the envelope to monitor light output from the lamp assembly (and particularly the CFL as will be described below) in order to determine when to shut off or terminate electrical power to the incandescent lamp source. Particularly, the sensor member 170 is a light sensor that monitors light output in the envelope. More particularly, the light sensor 170 is located adjacent a central region of the fluorescent lamp source, and is thus preferably positioned adjacent the discharge tube wall 118 in an area spaced from the first and second ends, and likewise spaced from the cathodes 130, 132. Monitoring the light output of the central portion of the CFL provides an accurate assessment for full light output operation of the CFL. That is, an amalgam dosed CFL initially starts to provide full light output at first and second ends of the lamp while the central region or middle section of the CFL is still dark during early operation of the discharge lamp. The light sensor 170 communicates with the power control module 110 via leads 172 that are fed through an opening in the shield 150 and connect to the printed circuit board of the power control module.

The incandescent lamp source 140 provides an instant light type of light source when power is switched on to the lamp assembly 100. Moreover, the incandescent lamp source heats up both the mercury reservoir and the entire discharge vessel of the energy saving type of light source or compact fluorescent lamp source 112. The heat from the incandescent light source results in a faster evaporation of the mercury from the mercury reservoir into the discharge vessel. Thus, upon switching on the lamp assembly, power is provided to both of the light sources. The incandescent lamp source 140 provides instant light and also provides desired heat to warm-up the fluorescent lamp source 112. Once the fluorescent lamp source is ignited, the heat also aids in the faster evaporation of the mercury and reduces the run-up time to a full light or steady state operation of the fluorescent lamp source 112. As is known in the art, initial ignition or start up of the fluorescent lamp results in greater light output at the first and second ends of the CFL. The light sensor member 170 may be located along the central portion of the fluorescent lamp so that the light sensor member monitors light output at a region spaced from the first and second ends of the compact fluorescent lamp source. Once the light output of the compact fluorescent lamp source 112 reaches a predetermined value, an overall energy saving is improved by switching off power to the incandescent lamp source 140.

As noted above, the time to full light operation depends on how fast the glass discharge body reaches an optimal temperature where enough mercury can evaporate to the discharge vessel. Once the discharge vessel has warmed up and full light output is provided as evidenced by sufficient light output along the central portion of the discharge lamp, the instant light or incandescent light source 140 is no longer needed to provide a certain percentage of the lumen value for the lamp assembly. As is known, the incandescent lamp source reaches its lumen value and a steady state condition immediately. Therefore, the combination of the incandescent lamp and the CFL provides desired instant-on light and long term energy efficiency and energy savings.

Whereas a compact fluorescent lamp typically requires 0.5 to 1.5 seconds to preheat the electrodes before starting, and then requires an additional 20 to 120 seconds or more to reach the full light condition, the lamp assembly 100 of the present disclosure has an instant light feature of the incandescent lamp source 140 and a run-up time to full light of the compact fluorescent lamp source 112. Energy savings is still achieved as a result of switching off the incandescent lamp source once the discharge tube has reached the predetermined value of light output as monitored along the central region of the CFL lamp by the light sensor 170.

Both light sources may be located within the common outer bulb 160. This allows the arrangement to achieve the shortest warm-up period by reducing the loss of heat to the external environment. Moreover, location of the sensor member 170 to monitor a central portion of the discharge or CFL lamp source more accurately reflects the operation of the compact fluorescent lamp and when to switch off power to the incandescent lamp source once the CFL has reached full light output. Thus, it is important to orient the light sensor member 170 so that light output from the incandescent light source does not provide a false reading of full light output or impact the light sensor member in monitoring operational output of the CFL. The light sensor member may be disposed closely adjacent the wall of the discharge lamp and at a location that is minimally impacted by the light output from the incandescent lamp source. Likewise, locating the light sensor member 170 at a position at approximately mid-height of the thickness of the tube wall diameter and close to the wall surface will limit the amount of ambient light that reaches the light sensor member, as well as light from the secondary, incandescent light source.

The stabilization of the primary light source can be sensed by the light output of the CFL, and so the light sensor can sense if the primary light source is at full light output. For example, the amalgam dosed CFL usually starts to provide full light output at two ends of the discharge lamp while the central region or middle section is still dark. If the light sensor is adjusted to sense the light output of the central portion or middle section, the secondary light source can be turned off when the primary lamp assembly is fully stabilized. The light sensor 170 is advantageously located adjacent the primary light source without sensing the light of the secondary light source. This solution eliminates problems associated with thermal switches, work timer circuits, etc., that can be adversely impacted by indirect factors. By directly monitoring light output of the primary light source, an accurate, effective operation of the combination lamp assembly can be achieved by shutting off the secondary, incandescent lamp source only after full light output is achieved by the CFL.

The disclosure has been described with respect to various embodiments. Obviously, modifications and alterations may be contemplated by one skilled in the art, and the subject disclosure should not be limited to the particular examples described above but instead through the following claims.

## Claims

1. A lamp assembly (100) comprising:
a lamp base (102) having a compartment (106);
an elongated discharge lamp source (112);
an incandescent lamp source (140) disposed adjacent to the discharge lamp source;
an envelope (160) forming a cavity around at least the discharge and incandescent lamp sources;
a power control module (110) received in the lamp base compartment and operatively connected to the discharge and incandescent lamp sources; and
a light sensor member (170) disposed in the envelope at a location for detecting light output from a central portion of the discharge lamp and operatively communicating with the power control module for monitoring whether to terminate power supplied to the incandescent lamp source.

2. The lamp assembly of claim 1, wherein the sensor member (170) is a light sensor for monitoring the light output from the central portion of the discharge lamp.

3. The lamp assembly of claim 2, wherein the power control module (110) terminates power to the discharge lamp source when light sensor detects light output from the central portion located between first and second ends of the discharge lamp source.

4. The lamp assembly of claim 2 or claim 3, wherein the light sensor (170) is located adjacent a wall of the discharge lamp source.

5. The lamp assembly of any one of claims 1 to 4, wherein the light sensor (170) is oriented so that light from the discharge lamp source is not received by the light sensor.

6. The lamp assembly (100) of any preceding claim, for providing instant light and reducing run-up time, the lamp assembly comprising:
a lamp base (102) having an inner compartment (106);
a fluorescent lamp source (112) including an elongated discharge chamber extending between first and second cathodes (130, 132);
an incandescent lamp source (140) including a filament and being disposed adjacent to the fluorescent lamp;
a bulb (160) forming a cavity around at least the fluorescent and incandescent lamp sources;
a power control module (110) received in the lamp base compartment and operatively connected to the fluorescent and incandescent lamp sources;
a shield (150) extending between lamp base compartment and the envelope cavity; and
a light sensor member (170) disposed in the envelope cavity to receive light output from a central portion of the fluorescent lamp source and operatively communicating with the power control module for.

7. The lamp assembly of claim 6, wherein the incandescent lamp source (140) includes an envelope surrounding the filament.

8. The lamp assembly of claim 6 or claim 7, wherein the fluorescent lamp source (112) is a compact fluorescent lamp source that includes a tubular portion that encloses an interior volume, and the incandescent lamp source is received in the interior volume, wherein, preferably, the compact fluorescent lamp (112) is a spiral lamp with first and second legs (114, 116) extending from the lamp base, and the light sensor is located away from the legs.

9. The lamp assembly of claim 6, 7 or 8, wherein the lamp assembly has a central axis and a longitudinal axis of the compact fluorescent lamp source (112) is substantially aligned with the central axis.

10. The lamp assembly of claim 6, 7, 8 or 9, wherein the lamp base (102) includes a plastic housing portion received in a base region of the bulb, the plastic housing portion and the shield (150) segregating the light sensor (170) from the power control module (110) which includes a ballast for controlling operation of the fluorescent lamp source.

11. A method of assembling a lamp comprising:
providing a lamp base (102);
providing a fluorescent lamp source (112);
positioning an incandescent lamp source (140) adjacent the fluorescent lamp source;
enclosing at least the fluorescent lamp source and the incandescent lamp source in a bulb (160) connected to the lamp base;
connecting the fluorescent lamp source and the incandescent lamp source to a power control module (110) for selectively terminating power to the incandescent lamp source in response to the sensor detecting a light output from a central region of the fluorescent lamp source; and
locating a light sensor (170) in the bulb at a location spaced from the power control module to monitor light output from the central region of the fluorescent lamp source.

12. The method of claim 11, wherein the light sensor (170) is oriented so that light output from the incandescent lamp source is not received by the light sensor.

13. The method of claim 11 or claim 12, further comprising forming the fluorescent lamp (112) as a compact fluorescent lamp, preferably in a spiral shape.

14. The method of claim 11, 12 or 13, wherein the locating step includes at least one of:
mounting the thermal sensor adjacent the fluorescent lamp source (112) to monitor a temperature of the fluorescent lamp source (112); and
mounting the thermal sensor adjacent a cathode enclosed within a discharge tube wall of the fluorescent lamp source (112).

15. The method of any one of claims 11 to 14, further comprising separating the power control module from the lamp sources with a barrier wall, preferably by allowing legs of the lamp sources to extend through the barrier wall for connection with the power control module.
